(19) Europäisches Patentamt

European Patent Office

Office européen des brevets

(11) **EP 2 502 673 A1**

(12) **EUROPEAN PATENT APPLICATION**
published in accordance with Art. 153(4) EPC

(43) Date of publication:
**26.09.2012 Bulletin 2012/39**

(21) Application number: **10831689.4**

(22) Date of filing: **19.11.2010**

(51) Int Cl.:
**B01J 38/00** (2006.01)          **B01J 27/199** (2006.01)
**B01J 27/28** (2006.01)          **C01B 25/45** (2006.01)

(86) International application number:
**PCT/JP2010/071202**

(87) International publication number:
**WO 2011/062303 (26.05.2011 Gazette 2011/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2009 JP 2009264778**

(71) Applicant: **Sumitomo Chemical Co., Ltd
Chuo-ku, Tokyo 104-8260 (JP)**

(72) Inventors:
• **MURAKAMI, Masayoshi
Kobe-shi
Hyogo 655-0047 (JP)**
• **NISHIMOTO, Junichi
Niihama-shi
Ehime 792-0009 (JP)**

(74) Representative: **Winter, Brandl, Fürniss, Hübner, Röss, Kaiser, Polte - Partnerschaft
Alois-Steinecker-Straße 22
85354 Freising (DE)**

(54) **METHOD FOR RECOVERING POLYOXOANION COMPOUND**

(57)    A method for recovering a polyoxoanion compound from an aqueous solution containing the polyoxoanion compound which comprises the following steps: Step (1): a step of mixing an organic solvent capable of forming a complex with the above-mentioned polyoxoanion compound with the above-mentioned aqueous solution followed by separating to a first phase containing the above-mentioned polyoxoanion compound and the above-mentioned organic solvent, and a second phase, Step (2): a step of mixing a hydrophobic organic solvent with the above-mentioned first phase followed by separating to an organic phase containing the above-mentioned organic solvent and the above-mentioned hydrophobic organic solvent, and an aqueous phase containing the above-mentioned polyoxoanion compound.

EP 2 502 673 A1

**Description**

Technical Field

The present invention relates to a method for recovering a polyoxoanion compound.

Background Art

The present inventors have proposed that a ketone compound can be produced efficiently and selectively by oxidizing an olefin in the presence of a polyoxoanion compound as the method for producing the ketone compound (e.g. JP 2007-185656 A). In such case, if the polyoxoanion compound can be reused, the ketone compound can be efficiently produced.

Disclosure of the Invention

The present invention provides:

[1] A method for recovering a polyoxoanion compound from an aqueous solution containing the polyoxoanion compound which comprises the following steps:

Step (1): a step of mixing an organic solvent having an ability of forming a complex with the above-mentioned polyoxoanion compound with the above-mentioned aqueous solution followed by separating to a first phase containing the above-mentioned polyoxoanion compound and the above-mentioned organic solvent, and a second phase,

Step (2): a step of mixing a hydrophobic organic solvent with the above-mentioned first phase followed by separating to an organic phase containing the above-mentioned organic solvent and the above-mentioned hydrophobic organic solvent, and an aqueous phase containing the above-mentioned polyoxoanion compound;

[2] The method according to [1], wherein the first phase further contains water;
[3] The method according to [1] or [2], wherein the aqueous solution is an aqueous solution containing a hydrosoluble amide compound;
[4] The method according to [3], wherein the hydrosoluble amide compound is acetamide;
[5] The method according to any one of [1] to [4], wherein the aqueous solution is an aqueous solution containing a carboxylic acid compound having 1 to 6 carbon atoms;
[6] The method according to any one of [1] to [5], wherein the polyoxoanion compound is a compound represented by the formula $H_aX_bQ_dZ_eO_f$
wherein X is an atom selected from the group consisting of P, Si, As, Ge and S, Q and Z are atoms selected form W, V and Mo, and Q and Z may be the same, and a is an integer of 3 to 24, b is an integer of 3 to 24, d and e each is an integer of 1 to 18, and f is an integer of 15 to 62;
[7] The method according to any one of [1] to [6], wherein the polyoxoanion compound is at least one compound selected from the group consisting of a phosphomolybdic acid, a silicomolybdic acid, a phosphotungstic acid, a silicotungstic acid, a phosphomolybdotungstic acid, a silicomolybdotungstic acid, a phosphomolybdovanadic acid, a silicomolybdovanadic acid, a phosphotungstovanadic acid and a silicotungstovanadic acid;
[8] The method according to any one of [1] to [7], wherein the polyoxoanion compound is a phosphomolybdic acid or a phosphomolybdovanadic acid;
[9] The method according to any one of [1] to [8], wherein the organic solvent having an ability of forming a complex with the polyoxoanion compound is at least one organic solvent selected from the group consisting of a cyclic ketone, a carbonate ester and a phosphate eater;
[10] The method according to any one of [1] to [9], wherein the organic solvent having an ability of forming a complex with the polyoxoanion compound is at least one organic solvent selected from the group consisting of cyclohexanone, propylene carbonate and tri-n-butyl phosphate;
[11] The method according to any one of [1] to [10], wherein the hydrophobic organic solvent is an aromatic hydrocarbon having 6 to 10 carbon atoms;
[12] The method according to any one of [1] to [11], wherein the first phase, the hydrophobic organic solvent and further water are mixed in the step (2);
[13] A method for producing a purified polyoxoanion compound which comprises: a step (I) of mixing a crude solution containing a polyoxoanion compound with an organic solvent having an ability of forming a complex with the above-mentioned polyoxoanion compound followed by separating to a first phase containing the above-mentioned polyoxoanion compound and the above-mentioned organic solvent, and a second phase, and a step (II) of mixing a hydrophobic organic solvent with the above-mentioned first phase followed by separating to a phase containing the above-mentioned organic solvent and the above-mentioned hydrocarbon solvent, and a phase containing the above-mentioned polyoxoanion compound;

[14] The method according to [13], wherein the crude solution is a solution further containing a hydrosoluble amide compound;

[15] The method according to [13] or [14], wherein the polyoxoanion compound is at least one compound selected from the group consisting of a phosphomolybdic acid, a silicomolybdic acid, a phosphotungstic acid, a silicotungstic acid, a phosphomolybdotungstic acid, a silicomolybdotungstic acid, a phosphomolybdovanadic acid, a silicomolybdovanadic acid, a phosphotungstovanadic acid and a silicotungstovanadic acid;

[16] The method according to any one of [13] to [15], wherein the polyoxoanion compound is a phosphomolybdic acid or a phosphomolybdovanadic acid;

[17] The method according to any one of [13] to [16], wherein the organic solvent having an ability of forming a complex with the polyoxoanion compound is at least one organic solvent selected from the group consisting of a cyclic ketone, a carbonate ester, an alkyl ether and a phosphate ester;

[18] The method according to any one of [13] to [17], wherein the organic solvent having an ability of forming a complex with the polyoxoanion compound is at least one organic solvent selected from the group consisting of a cyclic ketone, a carbonate ester and a phosphate ester;

[19] The method according to any one of [13] to [18], wherein the organic solvent having an ability of forming a complex with the polyoxoanion compound is at least one organic solvent selected from the group consisting of cyclohexanone, propylene carbonate and tri-n-butyl phosphate.

Embodiment of Carrying Out the Present Invention

The present invention will be illustrated in detail below.

The method of the present invention is a method for recovering a polyoxoanion compound from an aqueous solution containing the polyoxoanion compound which comprises the following steps:

Step (1): a step of mixing an organic solvent having an ability of forming a complex with the above-mentioned polyoxoanion compound with the above-mentioned aqueous solution followed by separating to a first phase containing the above-mentioned polyoxoanion compound and the above-mentioned organic solvent, and a second phase,

Step (2): a step of mixing a hydrophobic organic solvent with the above-mentioned first phase followed by separating to an organic phase containing the above-mentioned organic solvent and the above-mentioned hydrophobic organic solvent, and an aqueous phase containing the above-mentioned polyoxoanion compound.

In the present invention, the polyoxoanion compound is not especially limited, and examples thereof include those containing an atom selected from P, Si, As, Ge and S, an atom selected form W, V and Mo, and an oxygen atom.

Specific examples of the above-mentioned polyoxoanion compound is represented by the formula

$$H_aX_bQ_dZ_eO_f$$

wherein X is an atom selected from the group consisting of P, Si, As, Ge and S, Q and Z are atoms selected form W, V and Mo, and Q and Z may be the same, and a is an integer of 3 to 24, b is an integer of 3 to 24, d and e each is an integer of 1 to 18, and f is an integer of 15 to 62.

As the above-mentioned polyoxoanion compound, at least one selected from the group consisting of a phosphomolybdic acid, a silicomolybdic acid, a phosphotungstic acid, a silicotungstic acid, a phosphomolybdotungstic acid, a silicomolybdotungstic acid, a phosphomolybdovanadic acid, a silicomolybdovanadic acid, a phosphotungstovanadic acid and a silicotungstovanadic acid is preferable, and a phosphomolybdic acid and a phosphomolybdovanadic acid are more preferable.

In the aqueous solution containing the polyoxoanion compound, the concentration of the polyoxoanion compound is not limited, and it is usually about 0.1 to about 10 parts by mass per 100 parts by mass of water.

The acidity of the above-mentioned aqueous solution differs depending on the amount of proton of the heteropolyacid, and is not especially limited, and it is generally pH 1 to pH 7.

The above-mentioned aqueous solution may contain a hydrosoluble organic solvent. Examples of the above-mentioned hydrosoluble organic solvent include a nitrile solvent such as alkyl cyanide having 2 to 4 carbon atoms, and an alcohol having 1 to 5 carbon atoms.

While the polyoxoanion compound is dissolved in water in the above-mentioned aqueous solution, it may not be dissolved therein perfectly.

In the present invention, the aqueous solution containing the polyoxoanion compound is usually a crude solution, and further contains a compound other than the polyoxoanion compound such as a hydrosoluble amide compound and a carboxylic acid compound. In the above-mentioned aqueous solution, the compound other than the polyoxoanion compound may contain usually in 0.01 to 10% by mass in total, and typically in 0.01 to 5% by mass.

Examples of the above-mentioned hydrosoluble amide compound include acetamide. In the above-mentioned aqueous solution, the hydrosoluble amide compound usually may contain in 0.01 to 10% by mass.

Examples of the above-mentioned carboxylic acid compound include a carboxylic acid having 1 to 6 carbon atoms such as adipic acid. In the above-mentioned aqueous solution, the carboxylic acid compound usually may contain in 0.01 to 5% by mass.

Examples of the compound other than the above-mentioned polyoxoanion compound further include an inorganic compound such as palladium acetate and iron sulfate. In the above-mentioned aqueous solution, the inorganic compound usually may contain in 0.01 to 1% by mass.

Examples of the above-mentioned aqueous solution include a reaction mixture generated by a reaction of an organic compound conducted in a solvent containing water in the presence of the polyoxoanion compound such as a reaction mixture generated on producing a ketone compound in the presence of the polyoxoanion compound; a liquid containing the polyoxoanion compound recovered from reaction mixture generated by the reaction of an organic compound; and a leaching liquid of the polyoxoanion compound used.

Specific examples of the above-mentioned aqueous solution include a mixture of the polyoxoanion compound, acetamide, a carboxylic acid having 1 to 6 carbon atoms and water, a mixture of the polyoxoanion compound, a carboxylic acid having 1 to 6 carbon atoms and water, and a mixture of the polyoxoanion compound, acetamide and water.

The solubility of the organic solvent having an ability of forming a complex with the above-mentioned polyoxoanion compound (hereinafter, sometimes referred to as "non-hydrosoluble solvent") in water at 20°C is usually 20& by weight or less, and preferably more than 1% by weight and 20& by weight or less. The above-mentioned non-hydrosoluble solvent can be arbitrarily selected depending on the kinds of the desired polyoxoanion compound.

Whether it has an ability of forming a complex with the polyoxoanion compound or not can be estimated by the operation shown in below.

1. An aqueous solution of the polyoxoanion compound previously prepared is mixed with a non-hydrosoluble solvent being tested to conduct still standing, and a degree of phase separation is checked.

2. When the phase separation is confirmed in the above-mentioned operation 1., a component of the polyoxoanion compound is checked by analyzing a phase containing the non-hydrosoluble solvent. When the phase containing the non-hydrosoluble solvent contains the polyoxoanion compound, the organic solvent used is estimated to have an ability of forming a complex. In addition, when the polyoxoanion compound is colored, the phase containing the non-hydrosoluble solvent is colored by forming a complex with the polyoxoanion compound, and therefore, it can be confirmed by visual observation.

Examples of the above-mentioned non-hydrosoluble solvent include at least one non-hydrosoluble solvent selected from the group consisting of a cyclic ketone, a carbonate ester, an alkyl ether and a phosphate eater.

Examples of the non-hydrosoluble solvent include the solvents described in Analytical Chemistry: vol. 25 No. 11 p1668 to 1673 etc., specifically a cyclic ketone such as 2, 6-dimethyl-heptanone; a carboxylic ester such as ethyl acetate, 1-butyl acetate, amyl acetate and ethyl acetoacetate; a carbonate ester such as dimethyl carbonate, diethyl carbonate, ethylene carbonate and propylene carbonate; an alkyl ether such as ethyle ether and 2-propyl ether; and a phosphate eater such as tri-n-butyl phosphate. Depending on the kinds of the polyoxoanion compound, pH can be adjusted by adding sulfuric acid or the like.

As the above-mentioned non-hydrosoluble solvent, a solvent selected from the group consisting of a cyclic ketone, a carbonate ester and a phosphate eater is preferable, and a solvent selected from the group consisting of a cyclic ketone having a carbon ring having 5 to 12 carbon atoms, a carbonate ester having 3 to 5 carbon atoms and a phosphate eater having 9 to 24 carbon atoms is more preferable, and cyclohexanone, propylene carbonate and tri-n-butyl phosphate are still more preferable.

The above-mentioned non-hydrosoluble solvent may be a mixed solvent containing two or more kinds of the solvent.

While, in Step (1), mixing of the above-mentioned aqueous solution and the non-hydrosoluble solvent may be an embodiment wherein the non-hydrosoluble solvent is added to the aqueous solution charged into a container set at a predetermined temperature or may be an embodiment wherein the aqueous solution is added to the non-hydrosoluble solvent charged into a container set at a predetermined temperature, the non-hydrosoluble solvent is preferably added to the aqueous solution. The non-hydrosoluble solvent may be added to the aqueous solution at a time, and may be separately added to the aqueous solution with stirring.

The non-hydrosoluble solvent may be used in an amount so that the mixture containing the polyoxoanion compound and the non-hydrosoluble solvent can be separated after the above-mentioned mixing, and is not specifically limited.

The amount of the non-hydrosoluble solvent can be arbitrarily selected depending on the kind and concentration of the polyoxoanion compound in the aqueous solution, and the kind of the non-hydrosoluble solvent. The amount of the non-hydrosoluble solvent is usually 0.1 to 200 parts by mass per 100 parts by mass of the aqueous solution, and preferably 1 to 100 parts by mass.

The above-mentioned mixing is usually carried out at ordinary temperature (approximately 20 to approximately 30°C), and it can be conducted a temperature in a range where water and the non-hydrosoluble solvent do not evaporate significantly.

The above-mentioned mixing may be carried out using a stirring apparatus.

A first phase containing the polyoxoanion compound and the non-hydrosoluble solvent, and a second phase are formed by mixing the above-mentioned aqueous solution with the above-mentioned non-hydrosoluble solvent. By the mixing, the non-hydrosoluble solvent is usually partitioned in the first phase in a ratio of a partition ratio of 60 to 100%, and water is usually partitioned in the second phase in a ratio of a partition ratio of 75 to 99%. In this specification, the partition ratio is calculated according to the method described in Examples.

The first phase is usually a mixture containing the polyoxoanion compound and the non-hydrosoluble solvent as a main component and further containing water, and the non-hydrosoluble solvent of its solubility in water or more is usually contained, and the non-hydrosoluble solvent of 50% by weight or more of total amount is preferably contained.

The First phase sometimes contains compounds other that the polyoxoanion compound such as hydrosoluble amide compound existing in the aqueous solution, and in the first phase, however, the amount of the compounds other that the polyoxoanion compound is usually reduced to the level capable of reuse of the polyoxoanion compound.

The second phase is an aqueous mixture containing compounds other than the polyoxoanion compound as main component and water. While the second phase sometimes contains a little amount of the polyoxoanion compound, its concentration is lower than that in the first phase. The second phase usually contains water in a ratio of 50 to 99% by weight, and preferably in a ratio of 60 to 99%.

In addition, the polyoxoanion compound in the second phase may be recovered by repeating the operation wherein the above-mentioned aqueous mixture is mixed with the non--hydrosoluble solvent followed by separating to the first phase and the second phase. By repeating the operation, the recovery rate of the polyoxoanion compound can be improved. When a series of such operations is conducted twice or more, a mixture of the first phases obtained by conducting once the series of such operations can be subjected to Step (2) in combination.

The above-mentioned first and second phases can be formed efficiently by still standing, centrifugal separation or the like. Especially, the first and second phases can be formed rapidly. The state of each of phases can be determined by visual contact or a suitable means for detecting interfacial surface.

The operation of mixing the aqueous solution with the non-hydrosoluble solvent, and the operations such as still standing and centrifugal separation are not especially affected by pressure, and they can be carried out on pressurization or on reduced pressure. Each of the operations can be conducted with a convenient apparatus, and therefore, it is preferably conducted at a normal pressure.

Each of the operations described above is preferably carried out in an atmosphere of an inert gas or the like.

The first and second phases can be separated with a conventional separation means such as decantation.

In Step (2), a hydrophobic organic solvent is mixed with the first phase at first.

The above-mentioned hydrophobic organic solvent has usually solubility in water at 20°C of 1% by weight or less. Examples of the above-mentioned hydrophobic organic solvent include hydrocarbon solvents.

Examples of the above-mentioned hydrocarbon solvents include a chained saturated hydrocarbon having 5 to 10 carbon atoms such as n-pentane and n-hexane; a cyclic saturated hydrocarbon having 5 to 8 carbon atoms such as cyclopentane and cyclohexane; and an aromatic hydrocarbon such as benzene and toluene.

As the above-mentioned hydrocarbon solvent, an aromatic hydrocarbon is preferable, and toluene is more preferable.

The amount of the above-mentioned hydrocarbon solvent may be amount so that a phase of an aqueous solution of the polyoxoanion compound can be formed, and can be arbitrarily selected considering kinds and concentration of the polyoxoanion compound.

The amount of the above-mentioned hydrocarbon solvent is generally 0.01 to 1000 parts by mass per 100 parts by mass of the mixture of the first phases, and preferably 0.1 to 200 parts by mass.

The mixing may be a form wherein the hydrophobic organic solvent is added to the liquid of the first phase, and may be a form wherein the liquid of the first phase is added to the hydrophobic organic solvent, and the hydrophobic organic solvent is preferably added to the liquid of the first phase.

In Step (2), it is preferred that water is further added thereto in addition to the liquid of the first phase and the hydrophobic organic solvent. The aqueous solution of the polyoxoanion compound can be easily separated by mixing the liquid of the first phase with the hydrophobic organic solvent and water.

The mixing of the liquid of the first phase and the hydrophobic organic solvent is usually conducted at normal temperature (approximately 20 to approximately 30°C), and it can be conducted a temperature in a range where water and the hydrophobic organic solvent do not evaporate significantly. The mixing can be usually carried out under a normal pressure.

The above-mentioned mixing can be conducted by stirring the liquid of the first phase and the hydrophobic organic solvent with a stirring apparatus.

An organic phase containing the above-mentioned non-hydrosoluble solvent and the above-mentioned hydrophobic organic solvent and an aqueous phase containing the above-mentioned polyoxoanion compound are formed by mixing the liquid of the first phase with the hydrophobic organic solvent.

The organic phase and the aqueous phase can be efficiently formed by still standing, centrifugal separation or the like.

The polyoxoanion compound can be further recovered by repeating the operation wherein the organic phase obtained is mixed with the hydrophobic organic solvent to separate the organic phase and the aqueous phase newly formed.

The above-mentioned aqueous phase can be recovered with a conventional means such as decantation. The above-mentioned aqueous phase is obtained as an aqueous solution of the polyoxoanion compound purified. The polyoxoanion compound obtained by the recovering method of the present invention is purified, and therefore, can be reused.

The above-mentioned aqueous phase can be used as the polyoxoanion compound purified as it is for various reactions, and may be further purified with a conventional means such as distillation. In the present invention, the polyoxoanion compound obtained may be in a state of an aqueous solution, or a solid. The polyoxoanion compound purified can be isolated as a solid from the above-mentioned aqueous solution with a conventional means such as drying. Additionally, the oxidation or reduction state of the polyoxoanion compound can be changed by treating the above-mentioned aqueous phase with an oxidizing agent such as oxygen or a reducing agent such as hydrogen.

The producing method of the present invention may contain the other steps than Step (1) and/or Step (2). As an example, when impurities are contained in the aqueous solution of the polyoxoanion compound or the first phase, the impurities can be also removed by a conventional means such as filtration.

The recovering method of the present invention is also useful as a method for producing a purified polyoxoanion compound.

A method for producing a purified polyoxoanion compound which comprises a step (I) of mixing a crude aqueous solution containing a polyoxoanion compound with an organic solvent having an ability of forming a complex with the above-mentioned polyoxoanion compound followed by separating to a first phase containing the above-mentioned polyoxoanion compound and the above-mentioned organic solvent, and a second phase, and a step (II) of mixing a hydrophobic organic solvent with the above-mentioned first phase followed by separating to a phase containing the above-mentioned organic solvent and the above-mentioned hydrophobic solvent, and a phase containing the above-mentioned polyoxoanion compound is one of the present inventions.

In the producing method of the present invention, the step (I) can be conducted as same as Step (1), and the step (II) can be conducted as same as Step (2).

The purified polyoxoanion compound described above can be reused as a catalyst for producing various organic compounds.

The above-mentioned polyoxoanion compound can be used for producing a ketone described in JP 2007-185656 A.

The ketone can be produced, for example, by oxidizing an olefin in the presence of a palladium compound and the polyoxoanion compound in a solvent containing water.

Examples of the producing method of producing a ketone include a method of obtaining a ketone by oxidizing an olefin in the presence of a palladium compound and a polyoxoanion compound in a solvent containing water wherein the above-mentioned polyoxoanion compound is obtained by a method comprising a step (Ia) of mixing a reaction solution obtained by the above-mentioned oxidation with an organic solvent having an ability of forming a complex with the above-mentioned polyoxoanion compound followed by separating to a phase containing the above-mentioned polyoxoanion compound and the above-mentioned organic solvent, and

a step (2a) of mixing a hydrophobic organic solvent with the above-mentioned phase followed by separating to a phase containing the above-mentioned organic solvent and the above-mentioned hydrophobic solvent, and a phase containing the above-mentioned polyoxoanion compound.

In the method for producing a ketone of the present invention, the polyoxoanion compound is obtained from a reaction solution obtained by the above-mentioned olefin oxidation. The above-mentioned step (Ia) can be conducted as same as Step (1), and the above-mentioned step (2a) can be conducted as same as Step (2).

In the method for producing a ketone of the present invention, a carboxylic acid is sometimes generated as a by-product, and is sometimes contained in a reaction solution or a catalyst leaching liquid. Further, when a ketone is produced by setting the solvent containing water to a mixed solvent of water and acetonitrile, a hydrosoluble amide compound is sometimes generated as a by-product, and the hydrosoluble amide compound is sometimes contained in a reaction solution or a catalyst leaching liquid. Although, heretofore, it is difficult to separate the carboxylic acid and the hydrosoluble amide compound from the polyoxoanion compound, according to the method comprising the above-mentioned steps (1a) and (2a), the purified polyoxoanion compound is obtained, and therefore, the polyoxoanion compound recovered from the reaction solution can be reused.

Examples of the above-mentioned palladium compound include palladium acetate, palladium sulfate and palladium nitrate.

Examples of the above-mentioned solvent containing water include water, a mixed solvent of water and an alcohol, and a mixed solvent of water and a nitrile solvent. Examples of the above-mentioned alcohol include an alcohol having 1 to 4 carbon atoms. Examples of the nitrile solvent include an alkylnitrile having 2 to 4 carbon atoms such as acetonitrile and propyne(or o) nitrile. As the solvent containing water, a mixed solvent of water and a nitrile solvent is preferable, and a mixed solvent of water and acetonitrile is more preferable.

Examples of the above-mentioned olefin include a cycloalkene having 5 to 20 carbon atoms, specifically cyclopentene, cyclohexene, cycloheptene and cyclooctene.

Examples of the above-mentioned ketone include a cyclic ketone having 5 to 20 carbon atoms, specifically cyclopentanone, cyclohexanone, cycloheptanone and cyclooctanone.

As the above-mentioned olefin, cyclohexene is preferable, cyclohexanone is produced from cyclohexene.

In the method for producing a ketone of the present invention, the oxidation of an olefin may be conducted in the presence of the palladium compound, the polyoxoanion compound and a mesoporous silicate.

The above-mentioned mesoporous silicate means a regular mesoporous material having a pore of which pore diameter is 2 nm to 50 nm. The structure of mesoporous silicate is based on the definition of IZA (International Zeolite Association). Examples of the mesoporous silicate include MCM types such as MCM-41 and MCM-48, SBA types such as SBA-15 and SBA-16 (D. Zhao et al., Scienece, vol. 279 (1998) page 548; Zhao et al., J. Am. Chem. Soc. Vol. 120 (1998) page 6024) and HMS. MCM types can refer to Studies in Surface Science and Catalysis vol. 148 (2004) page 53. The above-mentioned mesoporous silicate can be produced according to known method.

The above-mentioned oxidation of the olefin can be usually carried out by contacting the above-mentioned olefin with oxygen molecule in the presence of the palladium compound, the polyoxoanion compound and as necessary, the mesoporous silicate. In the oxidation, the amount of oxygen is an amount of 1 mole to approximately 100 moles per 1 mole of the olefin, preferably an amount of approximately 2 moles to approximately 50 moles, and more preferably an amount of approximately 5 moles to approximately 20 moles. The partial pressure of oxygen is preferably a range of 0.01 to 10 MPa, and more preferably a range of 0.05 to 5 MPa.

The above-mentioned oxidation is usually carried out at a range of 0 to 200°C, preferably at a range of 10 to 150°C, and more preferably at a range of 30 to 100°C. The pressure on the above-mentioned oxidation is usually within a range of 0.01 to 10 MPa, preferably within a range of 0.05 to 7 MPa, and more preferably within a range of 0.1 to 5 MPa. The above-mentioned oxidation can be conducted in batch, semi-batch, continuous process or a combination thereof. The catalyst may be used in slurry process or fixed-bed process.

The ketone generated is usually separated from the reaction solution or reaction gas obtained by the above-mentioned oxidation with distillation, phase separation or the like.

When the cyclic ketone is produced in the method for producing a ketone of the present invention, the cyclic ketone is the non-hydrosoluble solvent in the step (1a) and the polyoxoanion compound can be recovered. Specifically, the above-mentioned step (1a) and step (2a) may be conducted for the solution obtained by recovering the polyoxoanion compound from the reaction solution obtained according to the method for producing a ketone of the present invention with a little amount of the cyclic ketone left.

The representative examples of the cyclic ketone used for the non-hydrosoluble solvent include cyclohexanone.

When the above-mentioned step (1a) is conducted for the solution obtained by recovering the polyoxoanion compound with a little amount of the cyclic ketone left, the above-mentioned non-hydrosoluble solvent may be further added thereto.

Example

The present invention will be illustrated using Examples in more detail below. The operations and analysis were carried out at normal temperature unless otherwise specifically noted.

Example 1

[A] As an aqueous solution containing a polyoxoanion compound (hereinafter, this aqueous solution is referred to as "crude solution"), a mixed liquid prepared by the following procedure was used.

Fifty (50) grams of ion-exchanged water, 1.2 g of $Fe_2(SO_4)_3 \cdot nH_2O$ (Kanto Chemical Co., Inc.) and 7 g of $H_7PMo_8V_4O_{40}$ (NIPPON INORGANIC COLOUR & CHEMICAL CO., LTD.) were charged into a 100 ml sample tube and were mixed to obtain a homogeneous solution. To 10 ml of this homogeneous solution, 0.16 g of adipic acid (carboxylic acid compound, NACALAI TEAQUE, INC.) was added, and then, was perfectly dissolved by ultrasound for 10 minutes.

Next, 0.5 g of acetamide (hydrosoluble amide compound, Kanto Chemical Co. Inc.) was added to the solution obtained to be perfectly dissolved thereby obtaining a crude solution.

[B] Step (1)

To 5 ml of the above-mentioned crude solution, 2 ml of cyclohexanone (Kanto Chemical Co. Inc.) was added to stir, and then, the mixed liquid was subjected to centrifugal separation (2000 to 3000 rpm, 1 minute), and still standing was further conducted to obtain two phases. Among two phases, a first phase (upper phase) was recovered by decantation. A series of operations wherein cyclohexanone was added to a second phase (lower phase) to be mixed, and the mixture obtained was subjected to centrifugal separation followed by still standing as same as the above, and a first phase among two phase newly obtained was recovered was four times repeated.

The mixed liquid obtained by combining the five first phases obtained in each of series of operations was subjected to Step (2). One point five (1.5) parts by weight of cyclohexanone in total was used per 1 part by weight of the crude solution.

[C] Step (2)

To 5 ml of the mixed liquid obtained in Step (1), 2.5 ml of toluene and 1 ml of water were added. After stirring them, an organic phase and an aqueous phase were obtained by conducting still standing. The organic phase and the aqueous phase were separated by decantation, and then, a series of operation wherein toluene and water were added to the aqueous phase to stir, and then, two phases were newly obtained by conducting still standing, and then, two phase obtained were separated was conducted.

Toluene was added in amount of 1.4 parts by weight per 1 part by weight of the mixed liquid, and water was added in amount of 0.3 part by weight per 1 part by weight of the mixed liquid.

[D] Analysis

The quantitative determinations of the composition components in each phase obtained in Step (1) and Step (2) were conducted according to the following method.

With regard to $H_7PMo_8V_4O_{40}$, each amount of Mo, V and Fe was calculated by quantitative determination with microwave decomposition-ICP emission analysis or fluorescent X-ray spectroscopy.

The amount of adipic acid was determined quantitatively with ion chromatography method.

Acetamide and hydrophobic organic solvent were determined quantitatively with gas chromatography method having FID detector.

[E] Partition of each of components

Partition coefficient Log P was calculated according to the following formula.

$$\text{Log P} = \text{Log}_{10}[\text{concentration in A phase (\% by weight)/concentration in B phase (\% by weight)}]$$

In addition, in this formula for calculating partition coefficient Log P, A phase is "first phase" in Step (1), and B phase falls into "second phase". In Step (2), A phase is "organic phase", and B phase falls into "aqueous phase".

That is, it is expressed that when Log P is more than 0 (Log P>0), the bigger its value is, the more object substance is partitioned in A phase ("first phase" or "organic phase"), and when Log P is less than 0 (Log P<0), the bigger its negative value is, the more object substance is partitioned in B phase ("second phase" or "aqueous phase").

In addition, when no partition in B phase is found, or when no partition in A phase is found, it is referred to as "∞" or "-∞".

Partition ratio was calculated according to the following formula.

$$\text{Partition ratio (\%)} = \text{(content in A phase or B phase)}/[\text{(content in A phase)}+\text{(content in B phase)}] \times 100$$

Each of the partition ratios and the partition coefficients of each of the phases obtained in Step (1) and Step (2) are shown in Table 1 and Table 2. The concentration of each of contents in the aqueous phase obtained in Step (2) is shown in Table 2-1. In addition, the first phase is a value of the mixed liquid subjected to the second operation.

Table 1

|  | Mo | V | Fe | Acetamide | Adipic acid | Water | Cyclohexanone |
|---|---|---|---|---|---|---|---|
| First phase (partition ratio) | 100 | 92 | 11 | 47 | 99 | 21 | 95 |
| Second phase (partition ratio) | 0 | 8 | 89 | 53 | 1 | 79 | 5 |
| Log P | 2.4 | 0.8 | -1.2 | -0.4 | 1.6 | -2 | 1.0 |

Table 2

|  | Mo | V | Fe | Acetamide | Adipic acid | Cyclohexanone |
|---|---|---|---|---|---|---|
| Organic phase (partition ratio) | 0 | 0 | 0 | 0 | 53 | 99 |
| Aqueous phase (partition ratio) | 100 | 100 | 100 | 100 | 47 | 1 |
| Log P | $-\infty$ | $-\infty$ | $-\infty$ | $-\infty$ | 0.4 | 1.4 |

Table 2-1

|  | $H_7PMo_8V_4O_{40}$ | Acetamide | Adipic acid |
|---|---|---|---|
| Concentration (unit: % by weight) | 12 | 2.3 | 0.9 |

Example 2

[B2] Step (1)

To 6 ml of the crude solution obtained according to the procedure of Example 1 [A], 3 ml of propylene carbonate was added to stir, and then, the mixed liquid obtained was subjected to centrifugal separation (2000 to 3000 rpm, 1 minute), and still standing was further conducted to obtain two phases. Among two phases, a first phase (upper phase) was recovered by decantation. A series of operations wherein propylene carbonate was added to a second phase after recovering the first phase, and then, they were mixed to be subjected to centrifugal separation, and then, still standing was conducted to obtain two phase as same as the above, and a first phase newly obtained was recovered was conducted. The mixed liquid obtained by combining the two first phases obtained in each of operations was subjected to Step (2). Zero point seven (0.7) part by weight of propylene carbonate in total was used per 1 part by weight of the crude solution.

[C2] Step (2)

To 1.5 ml of the mixed liquid obtained in Step (1), 1 ml of toluene and 1 ml of water were added. After stirring, an organic phase and an aqueous phase were obtained by conducting still standing. The organic phase and the aqueous phase were separated by decantation, and then, a series of operation wherein toluene and water were added to the aqueous phase to stir, and then, two phases were obtained by conducting still standing, and then, two phases were separated was conducted. In addition, toluene was added in amount of 0.6 part by weight per 1 part by weight of the mixed liquid, and water was added in amount of 0.7 part by weight per 1 part by weight of the mixed liquid.

Each of the partition ratios and the partition coefficients of each of the phases obtained in Step (1) and Step (2) are shown in Table 3 and Table 4. The concentration of each of contents in the aqueous phase obtained in Step (2) is shown in Table 4-1.

Table 3

|  | Mo | V | Fe | Acetamide | Adipic acid | Water | Propylene carbonate |
|---|---|---|---|---|---|---|---|
| First phase (partition ratio) | 66 | 58 | 11 | 20 | 45 | 12 | 71 |
| Second phase (partition ratio) | 34 | 42 | 89 | 80 | 55 | 88 | 29 |
| Log P | 0.4 | 0.3 | -0.7 | -0.4 | 0.1 | -0.7 | 0.5 |

Table 4

|  | Mo | V | Fe | Acetamide | Adipic acid | Propylene carbonate |
|---|---|---|---|---|---|---|
| Organic phase (partition ratio) | 2 | 2 | 0 | 0 | 12 | 78 |
| Aqueous phase (partition ratio) | 98 | 98 | 100 | 100 | 88 | 22 |
| Log P | -1.7 | -1.6 | -∞ | -∞ | -0.9 | 0.5 |

Table 4-1

|  | $H_7PMo_8V_4O_{40}$ | Acetamide | Adipic acid |
|---|---|---|---|
| Concentration (unit: % by weight) | 7.5 | 1.3 | 0.7 |

Example 3

[A3] Preparation of crude solution

To 10 ml of the crude solution obtained according to the procedure of Example 1 [A], 0.7 ml of acetonitrile and 0.1 ml of cyclohexanone were added to prepare a crude solution for using Example 3.

[B3] Step (1)

To 6 ml of the above-mentioned crude solution, 2 ml of tri-n-butyl phosphate (Kanto Chemical Co., Inc., heainafter, referred to as "TBP") was added to stir, and then, the mixed liquid obtained was subjected to centrifugal separation (2000 to 3000 rpm, 1 minute), and still standing was further conducted to obtain two phases. Among two phases, a first phase (upper phase) was recovered by decantation. A series of operations wherein TBP was added to a second phase after recovering the first phase, and then, they were mixed to be subjected to centrifugal separation, and then, still standing was conducted to obtain two phase as same as the above, and a first phase newly obtained was recovered was conducted. The mixed liquid obtained by combining the two first phases obtained in each of operations was subjected to Step (2). Zero point six (0.6) part by weight of TBP in total was used per 1 part by weight of the crude solution.

[C3] Step (2)

To 1 ml of the mixed liquid obtained in Step (1), 1.3 ml of toluene and 2.4 ml of water were added. After stirring, an organic phase and an aqueous phase were obtained by conducting still standing. These were separated by decantation, and then, each of the organic phase and the aqueous phase was analyzed.
Each of the partition ratios and the partition coefficients of each of the phases obtained in Step (1) and Step (2) are shown in Table 5 and Table 6. The concentration of each of contents in the aqueous phase obtained in Step (2) is shown in Table 6-1.

Table 5

|  | Mo | V | Fe | Acetamide | Adipic acid | Water | TBP |
|---|---|---|---|---|---|---|---|
| Upper phase (partition ratio) | 99 | 90 | 4 | 8 | 95 | 2 | 100 |
| Lower phase (partition ratio) | 1 | 10 | 96 | 92 | 5 | 98 | 0 |
| Log P | 1.3 | 0.6 | -∞ | -1.8 | 0.8 | -1.6 | ∞ |

Table 6

| | Mo | V | Fe | Acetamide | Adipic acid | TBP |
|---|---|---|---|---|---|---|
| Organic phase (partition ratio) | 0 | 0 | 0 | 9 | 71 | 100 |
| Aqueous phase (partition ratio) | 100 | 100 | 100 | 91 | 29 | 0 |
| Log P | -0.9 | -1.1 | $-\infty$ | $-\infty$ | 0.6 | $\infty$ |

Table 6-1

| | $H_7PMo_8V_4O_{40}$ | Acetamide | Adipic acid |
|---|---|---|---|
| Concentration (unit: % by weight) | 7.5 | 1.3 | 0.7 |

Example 4

[A4] As the crude solution, the mixed liquid prepared according to the following procedure was used.

Fifty (50) grams of ion-exchanged water, 7 g of $H_7PMo_8V_4O_{40}$ (NIPPON INORGANIC COLOUR & CHEMICAL CO., LTD.) and 0.23 g of palladium acetate (available from Sigma-Aldrich) were charged into a 100 ml sample tube and the mixture obtained was subjected to ultrasound for 3 hours to obtain a solution.

To this solution, 1.2 g of $Fe_2(SO_4)_3 \cdot nH_2O$ (Kanto Chemical Co., Inc.) was added to be perfectly dissolved. Ten (10) milliliter of the solution obtained was taken, and 0.16 g of adipic acid (available from NACALAI TEAQUE, INC.) and 0.5 g of acetamide (available from Kanto Chemical Co. Inc.) were added thereto to be perfectly dissolved thereby obtaining a crude solution.

[B4] Step (1)

To 1 part by weight of the crude solution, 0.3 part by weight of cyclohexanone was added to stir, and then, the mixed liquid obtained was subjected to centrifugal separation (2000 to 3000 rpm, 1 minute), and still standing was further conducted to obtain two phases. The two phases were separated by decantation to recover a first phase (upper phase)

[C4] Step (2)

To 1 part by weight of the liquid of the first phase, 0.6 part by weight of toluene and 0.5 part by weight of water were added. After stirring, an organic phase and an aqueous phase were obtained by conducting still standing. These were separated by decantation, and then, each of the organic phase and the aqueous phase was analyzed.

Each of the partition ratios and the partition coefficients of each of the phases obtained in Step (1) and Step (2) are shown in Table 7 and Table 8. The concentration of each of contents in the aqueous phase obtained in Step (2) is shown in Table 8-1.

Table 7

| | Pd | Mo | V | Fe | Acetamide | Adipic acid | Water | Cyclohexanone |
|---|---|---|---|---|---|---|---|---|
| Upper phase (partition ratio) | 100 | 85 | 74 | 17 | 9 | 54 | 3 | 68 |
| Lower phase (partition ratio) | 0 | 15 | 26 | 83 | 91 | 46 | 97 | 32 |
| Log P | $\infty$ | 1.2 | 0.9 | -1.2 | -0.5 | 0.5 | -1 | 0.8 |

Table 8

| | Pd | Mo | V | Fe | Acetamide | Adipic acid | Cyclohexanone |
|---|---|---|---|---|---|---|---|
| Organic phase (partition ratio) | 0 | 0 | 0 | 0 | 0 | 41 | 88 |
| Aqueous phase (partition ratio) | 100 | 100 | 100 | 100 | 100 | 59 | 12 |

(continued)

|  | Pd | Mo | V | Fe | Acetamide | Adipic acid | Cyclohexanone |
|---|---|---|---|---|---|---|---|
| Log P | -∞ | -∞ | -∞ | -∞ | -∞ | -0.2 | 0.8 |

Table 8-1

|  | $H_7PMo_8V_4O_{40}$ | Acetamide | Adipic acid |
|---|---|---|---|
| Concentration (unit: % by weight) | 16 | 1.2 | 1.1 |

Example 5

[B5] Preparation of crude solution

To 1 part by weight of the crude solution obtained according to the same manner of Example 1 [A], 0.01 part by weight of cyclohexanone was added, and these were mixed to prepare a crude solution.

[C5] Step (1)

To 1 part by weight of the above-mentioned crude solution, 0.7 part by weight of propylene carbonate was added, and these were stirred, and then, the mixed liquid obtained was subjected to centrifugal separation (2000 to 3000 rpm, 1 minute), and still standing was further conducted to obtain two phases. The two phases were separated by decantation to recover a first phase (upper phase).

[D5] Step (2)

To 1 part by weight of the liquid of the first phase, 1 part by weight of toluene and 0.6 part by weight of water were added. After stirring, an organic phase and an aqueous phase were obtained by conducting still standing.
Each of the partition ratios and the partition coefficients of each of the phases obtained in Step (1) and Step (2) are shown in Table 9 and Table 10. The concentration of each of contents in the aqueous phase obtained in Step (2) is shown in Table 10-1.

Table 9

|  | Pd | Mo | V | Fe | Acetamide | Water | Propylene carbonate |
|---|---|---|---|---|---|---|---|
| Upper phase (partition ratio) | 72 | 69 | 62 | 10 | 13 | 12 | 70 |
| Lower phase (partition ratio) | 28 | 31 | 38 | 90 | 87 | 88 | 30 |
| Log P | 0.5 | 0.4 | 0.3 | -0.7 | -0.6 | -0.7 | 0.5 |

Table 10

|  | Pd | Mo | V | Fe | Acetamide | Propylene carbonate |
|---|---|---|---|---|---|---|
| Organic phase (partition ratio) | 0 | 0 | 0 | 0 | 0 | 83 |
| Aqueous phase (partition ratio) | 100 | 100 | 100 | 100 | 100 | 17 |
| Log P | -∞ | -∞ | -∞ | -∞ | -∞ | 0.5 |

Table 10-1

|  | $H_7PMo_8V_4O_{40}$ | Acetamide |
|---|---|---|
| Concentration (unit: % by weight) | 9 | 0.6 |

Industrial Applicability

According to the present invention, a polyoxoanion compound can be recovered in a purified state. The polyoxoanion compound can be reused as a catalyst for producing various organic compounds.

**Claims**

1. A method for recovering a polyoxoanion compound from an aqueous solution containing the polyoxoanion compound which comprises the following steps:

    Step (1): a step of mixing an organic solvent having an ability of forming a complex with the above-mentioned polyoxoanion compound with the above-mentioned aqueous solution followed by separating to a first phase containing the above-mentioned polyoxoanion compound and the above-mentioned organic solvent, and a second phase,
    Step (2): a step of mixing a hydrophobic organic solvent with the above-mentioned first phase followed by separating to an organic phase containing the above-mentioned organic solvent and the above-mentioned hydrophobic organic solvent, and an aqueous phase containing the above-mentioned polyoxoanion compound.

2. The method according to claim 1, wherein the first phase further contains water.

3. The method according to claim 1, wherein the above-mentioned aqueous solution is an aqueous solution containing a hydrosoluble amide compound.

4. The method according to claim 3, wherein the hydrosoluble amide compound is acetamide.

5. The method according to claim 1, wherein the above-mentioned aqueous solution is an aqueous solution containing a carboxylic acid compound having 1 to 6 carbon atoms.

6. The method according to claim 1, wherein the polyoxoanion compound is a compound represented by the formula

$$H_a X_b Q_d Z_e O_f$$

    wherein X is an atom selected from P, Si, As, Ge and S, Q and Z are atoms selected form W, V and Mo, and Q and Z may be the same, and a is an integer of 3 to 24, b is an integer of 3 to 24, d and e each is an integer of 1 to 18, and f is an integer of 15 to 62.

7. The method according to claim 1, wherein the polyoxoanion compound is at least one compound selected from the group consisting of a phosphomolybdic acid, a silicomolybdic acid, a phosphotungstic acid, a silicotungstic acid, a phosphomolybdotungstic acid, a silicomolybdotungstic acid, a phosphomolybdovanadic acid, a silicomolybdovanadic acid, a phosphotungstovanadic acid and a silicotungstovanadic acid.

8. The method according to claim 1, wherein the polyoxoanion compound is a phosphomolybdic acid or a phosphomolybdovanadic acid.

9. The method according to claim 1, wherein the organic solvent having an ability of forming a complex with the polyoxoanion compound is at least one organic solvent selected from the group consisting of a cyclic ketone, a carbonate ester and a phosphate eater.

10. The method according to claim 1, wherein the organic solvent having an ability of forming a complex with the polyoxoanion compound is at least one organic solvent selected from the group consisting of cyclohexanone, propylene carbonate and tri-n-butyl phosphate.

11. The method according to claim 1, wherein the hydrophobic organic solvent is an aromatic hydrocarbon.

12. The method according to claim 1, wherein the first phase, the hydrocarbon solvent and further water are mixed in the step (2).

**13.** A method for producing a purified polyoxoanion compound which comprises: a step (I) of mixing a crude solution containing a polyoxoanion compound with an organic solvent having an ability of forming a complex with the above-mentioned polyoxoanion compound followed by separating to a first phase containing the above-mentioned polyoxoanion compound and the above-mentioned organic solvent, and a second phase, and a step (II) of mixing a hydrophobic organic solvent with the above-mentioned first phase followed by separating to a phase containing the above-mentioned organic solvent and the above-mentioned hydrocarbon solvent, and a phase containing the above-mentioned polyoxoanion compound.

**14.** The method according to claim 13, wherein the crude solution is a solution further containing a hydrosoluble amide compound.

**15.** The method according to claim 13, wherein the polyoxoanion compound is at least one compound selected from the group consisting of a phosphomolybdic acid, a silicomolybdic acid, a phosphotungstic acid, a silicotungstic acid, a phosphomolybdotungstic acid, a silicomolybdotungstic acid, a phosphomolybdovanadic acid, a silicomolybdovanadic acid, a phosphotungstovanadic acid and a silicotungstovanadic acid.

**16.** The method according to claim 13, wherein the polyoxoanion compound is a phosphomolybdic acid or a phosphomolybdovanadic acid.

**17.** The method according to claim 13, wherein the organic solvent having an ability of forming a complex with the polyoxoanion compound is at least one non-hydrosoluble solvent selected from the group consisting of a cyclic ketone, a carbonate ester, an alkyl ether and a phosphate ester.

**18.** The method according to claim 13, wherein the organic solvent having an ability of forming a complex with the polyoxoanion compound is at least one organic solvent selected from the group consisting of a cyclic ketone, a carbonate ester and a phosphate ester.

**19.** The method according to claim 13, wherein the organic solvent having an ability of forming a complex with the polyoxoanion compound is at least one organic solvent selected from the group consisting of cyclohexanone, propylene carbonate and tri-n-butyl phosphate.

<table>
<tr><td colspan="2" align="center">**INTERNATIONAL SEARCH REPORT**</td><td colspan="2">International application No.<br>PCT/JP2010/071202</td></tr>
</table>

A. CLASSIFICATION OF SUBJECT MATTER
*B01J38/00*(2006.01)i, *B01J27/199*(2006.01)i, *B01J27/28*(2006.01)i, *C01B25/45*(2006.01)i

According to International Patent Classification (IPC) or to both national classification and IPC

B. FIELDS SEARCHED

Minimum documentation searched (classification system followed by classification symbols)
B01J38/00, B01J27/199, B01J27/28, C01B25/45

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-532378 A (BP Chemicals Ltd.),<br>02 October 2002 (02.10.2002),<br>entire text<br>& US 2002/0054847 A1 & GB 9828020 A<br>& EP 1140703 A & WO 2000/037361 A1 | 1-19 |
| A | JP 10-137599 A (Mitsubishi Gas Chemical Co.,<br>Inc.),<br>26 May 1998 (26.05.1998),<br>claims; examples<br>(Family: none) | 1-19 |
| A | JP 01-048820 B2 (Asahi Chemical Industry Co.,<br>Ltd.),<br>20 October 1989 (20.10.1989),<br>claims; examples<br>& US 4677231 A & EP 181621 A2 | 1-19 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>16 February, 2011 (16.02.11) | Date of mailing of the international search report<br>08 March, 2011 (08.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/071202

C (Continuation).    DOCUMENTS CONSIDERED TO BE RELEVANT

| Category* | Citation of document, with indication, where appropriate, of the relevant passages | Relevant to claim No. |
|---|---|---|
| A | JP 59-051337 B2 (Daicel Chemical Industries, Ltd.), 13 December 1984 (13.12.1984), entire text (Family: none) | 1-19 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007185656 A

**Non-patent literature cited in the description**

- *Analytical Chemistry,* vol. 25 (11), 1668-1673
- **D. Zhao et al.** *Scienece,* 1998, vol. 279, 548
- **Zhao et al.** *J. Am. Chem. Soc.,* 1998, vol. 120, 6024
- *Studies in Surface Science and Catalysis,* 2004, vol. 148, 53